Europäisches Patentamt

European Patent Office

Office européen des brevets

(11) Veröffentlichungsnummer: **0 380 744**
**A1**

(12) **EUROPÄISCHE PATENTANMELDUNG**

(21) Anmeldenummer: 89113028.8

(22) Anmeldetag: 15.07.89

(51) Int. Cl.⁵: **H02K 21/12**

(30) Priorität: 03.08.88 DE 3826339

(43) Veröffentlichungstag der Anmeldung:
08.08.90 Patentblatt 90/32

(84) Benannte Vertragsstaaten:
AT BE CH DE FR GB IT LI NL SE

(71) Anmelder: **J.M. Voith GmbH**
**Sankt Pöltener Strasse 43**
**D-7920 Heidenheim(DE)**

(72) Erfinder: **Wüst, Bernhard, Dr.**
**Am Läutenberg 11/2**
**D-7928 Giengen(DE)**

(74) Vertreter: **Weitzel, Wolfgang, Dr.-Ing.**
**St. Pöltener Strasse 43**
**D-7920 Heidenheim(DE)**

(54) **Elektrische Maschine.**

(57) In einer elektrischen Maschine mit permanent-magnetisch erregtem Feld sind am Rotor (4) ringför-mig und sich zur Rotorwelle (3) koaxial erstreckende Polkörper (6) vorhanden, die zwischen statorseitigen Polschuhen (9) einen Luftspalt (10) bilden. Der Rotor besteht aus einer bestimmten Folge von wechselwei-se nebeneinander angeordneten Permanentmagne-ten (7) und Weicheisenteilen (7), die gemeinsam in Kunststoff eingebettet sind. Dadurch hat der Rotor eine labile Struktur mit geringem Elastizitätmodul. Durch Schwingungen, insbesondere Biegeschwin-gungen verändert sich der Luftspalt im Betrieb. Das führt zu Einbußen an Wirkungsgrad und vor allem erheblicher Geräuschbildung. Die Anbringung eines massiven Dämpfungsringes (12) an den freien En-den der Polkörper, eventuell mit Abstützung am Statorgehäuse (1), sorgt für ruhigeren Lauf der Ma-schine.

Fig.1

Die Erfindung betrifft eine elektrische Maschine, insbesondere eine stromrichtergespeiste Synchronmaschine mit Permanentmagnet-Erregung, gemäß dem Oberbegriff des Anspruches 1. Eine Maschine dieser Gattung ist bekannt aus der nicht vorveröffentlichten DE-OS 37 05 089.3.

Die Besonderheit dieser Bauart besteht darin, daß der Rotor im wesentlichen eine zentrale Scheibe umfaßt, an der im Bereich des äußeren Umfanges beidseitig eine zur Rotorwelle koaxiale ringförmige Polkörperstruktur angefügt ist. Diese Polkörperstruktur besteht aus einer festgelegten Folge von wechselweise nebeneinander und in Umfangsrichtung angeordneten Permanentmagneten und Weicheisenteilen.

Die Permanentmegnete und Weicheisenteile sind gemeinsam maßgenau und ringförmig in Kunststoff eingebettet und ebenso in axialer Richtung an der zentralen Scheibe befestigt. Die zentrale Scheibe selbst besteht vorzugsweise aus faserverstärktem Kunststoff. Das der Scheibe abgewandte freie Ende jeder Polkörperstruktur weist eine Abdeckplatte auf, die ebenfalls aus Kunststoff besteht.

Rings um den inneren und äußeren Umfang der Polkörperstruktur sind Polelemente angeordnet, die Bestandteil des Stators der Maschine sind und im Inneren stromdurchflossene Spulen aufweisen. Zur Polkörperstruktur des Rotors hin sind offene Polschuhe gerichtet, die bis auf einen geringen Luftspalt an den Rotor heranreichen.

Die magnetischen Flußeigenschaften verlangen es, daß der Rotor in seinen tragenden mechanischen Bauteilen weitgehend aus Kunststoff hergestellt ist. Der Polkörper erhält dadurch eine inhomogene Struktur, wobei einerseits die metallischen Permanentmagnete und Weicheisenteile mit ihrer Masse in Kunststoff eingebettet sind, welcher andererseits aber einen etwa um das Zehnfache geringeren Elastizitätsmodul als Stahl aufweist. Demzufolge ist der Rotor ein labiles Bauteil, das beim Betrieb zu jeglicher Art von Schwingungen, insbesondere Biegeschwingungen neigt. Dies wiederum führt zu ungleichen Luftspalten zwischen den Polkörpern und den Polschuhen. Von Nachteil sind dabei nicht nur Luftspalt-Unterschiede zwischen der rechten und linken Seite, sondern insbesondere zwischen den Luftspalten am inneren und äußeren Umfang der Polkörper. Die Folge ist ein gestörter Feldlinienverlauf während des Umlaufes, was sich in erheblicher Geräuschbildung und schlechtem Wirkungsgrad äußert. Maschinen dieser Art lassen sich daher noch nicht für höhere Leistung und/oder Drehzahl herstellen.

Der Erfindung liegt die Aufgabe zugrunde, eine elektrische Maschine gemäß dem Gattungsbegriff derart zu gestalten, daß das Laufverhalten des Rotors verbessert ist und die Leistung der Maschine gesteigert werden kann.

Diese Aufgabe wird durch das kennzeichnende Merkmal des Anspruches 1 gelöst. Danach ist erfindungsgemäß vorgesehen, an den der zentralen Scheibe abgewandten freien Enden der ringförmigen Polkörper massive Ringe anzuordnen. Diese dienen zur Formstabilisierung der Polkörper während des Betriebes und gewährleisten gleichbleibende Rundheit und somit konstante Luftspalte zwischen den Polschuhen und den Polkörpern des Rotors. Dadurch ist die Geräuschentwicklung reduziert und durch Verbesserung des Wirkungsgrades die Voraussetzung geschaffen, die elektrische Maschine auch für höhere Leistung zu konzipieren.

Vorteilhafte Ausgestaltungen der Erfindung sind in den Unteransprüchen angegeben. Die massiven Ringe werden vorzugsweise aus faserverstärktem Kunststoff hergestellt, so daß sie ohne Beeinträchtigung des magnetischen Flusses platzsparend nahe an den Permanentmagneten befestigt werden können. Ein besonderer Vorteil liegt darin, daß die Ringe sich radial nach innen zur Rotorwelle hin erstrecken können, so daß darüber hinaus eine im Statorgehäuse vorgesehene Lagerung, insbesondere mittels eines Wälzlagers, vorgesehen werden kann. Dies bringt eine weitere Verfestigung des Rotors im Sinne der Verbesserung der Laufruhe. Dabei kann der Ring in einem Teilbereich so gestaltet werden, daß er wenigstens in radialer Richtung geringfügig nachgiebig ist. Dadurch werden Verspannungen im Gehäuse oder im Rotor ausgeglichen ohne Einfluß auf die Luftspalte. Es ist darüber hinaus auch möglich, die Ringe nach radial innen und außen zu vergrößern bis in die Bereich der Polschuhe. Dadurch kann unter bestimmten Voraussetzungen auf eine zusätzliche Lagerung bzw. Abstützung im Statorgehäuse verzichtet werden, weil der die Enden der Polkörper umschließende Ring selbst besonders formsteif ist.

Zwei Ausführungsbeispiele der Erfindung werden nachstehend anhand der Zeichnung näher erläutert. Es zeigen:

Fig. 1 einen schematischen Teil-Längsschnitt durch einen Motor mit abgestütztem Rotor;

Fig. 2 einen schematischen Teil-Längsschnitt wie Fig. 1, wobei der Rotor einen massiven Versteifungsring ohne Lager aufweist.

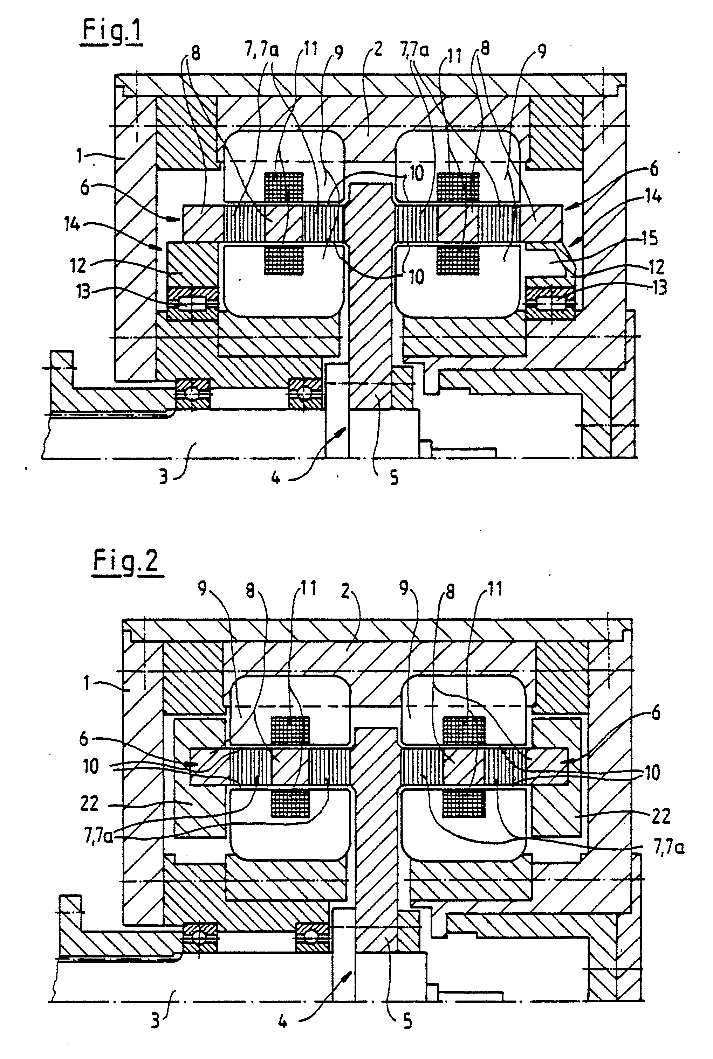

In Fig. 1 ist mit 1 ein Statorgehäuse bezeichnet, in dem eine Rotorwelle 3 drehbar gelagert ist. An dieser Rotorwelle ist an einem Flansch ein Rotor 4 befestigt. Dieser umfaßt eine zentrale Scheibe 5, an die sich an ihrem äußeren Umfang ringförmige und zur Rotorwelle 3 koaxiale Polkörper 6 anschließen. Der innere Aufbau des Rotors 4 entspricht dem aus der DE-OS 37 05 089 bekannten Rotor. Die Polkörper 6 bestehen aus einer bestimmten Folge von wechselweise nebeneinander und in Umfangsrichtung angeordneten Permanentmagneten 7 und Weicheisenteile 7a, die gemeinsam mit ringförmigen Elementen 8 zwischen und neben den Permanentmagneten in Kunststoff eingebettet sind.

Radial innerhalb und außerhalb der Polkörper 6 sind Polschuhe 9 am Statorgehäuse 1 so angeordnet, daß zu den Polkörpern 6 zumindest im Bereich der Permanentmagnete 7 radiale Luftspalte 10 entstehen. Die Polschuhe 9 sind über den ganzen Umfang verteilt und von Wicklungen 11 durchsetzt. Sie bilden einen im Statorgehäuse 1 fest angeordneten Stator 2 des Motors.

Radial innerhalb des äußersten, der zentralen Scheibe 5 entgegengesetzten ringförmigen Elementes 8 ist ein massiver Ring 12 angeordnet. Mittels eines Lagers 13 mit Abdichtung ist dieser Ring 12 am Statorgehäuse 1 abgestützt. Im rechten Teil der Fig. 1 ist dargestellt, wie der massive Ring 12 in einem Teilbereich 14 mit Ausnehmungen 15 versehen werden kann. Dadurch entsteht eine geringfügige radiale und/oder axiale Nachgiebigkeit zwischen dem Rotor und dem Statorgehäuse 1, so daß die Polkörper von eventuellen schädlichen Zwangskräften freigehalten werden. Der Abstützeffekt durch das Lager 13 bleibt dabei dennoch erhalten.

In Fig. 2 sind gleiche Teile mit denselben Bezugszeichen versehen. Der dargestellte Motor entspricht im Aufbau demjenigen der Fig. 1. An den der zentralen Scheibe entgegengesetzten Enden der Polkörper 6 befindet sich jeweils ein massiver Ring 22, der sich gleichermaßen nach radial innen und/oder außen erstreckt und dadurch ein formsteifes Bauteil darstellt. Je nach Größe des Motors oder der Bauart des Gehäuses bzw. sonstigen baulichen Voraussetzungen kann mit einer solchen Ausbildung eines versteifenden Ringes auf eine Lagerung bzw. Abstützung am Getriebegehäuse 1 verzichtet werden.

Es versteht sich von selbst, daß Ringe 12 bzw. 22 gemäß Figur 1 oder 2 zur Dämpfung und Versteifung der Polkörper erst gegen Ende des Montagefortganges eingesetzt und befestigt werden können. Dementsprechend ist das Statorgehäuse geteilt auszubilden. Einzelheiten dazu sind nicht gesondert dargestellt.

## Ansprüche

1. Elektrische Maschine, insbesondere Motor mit permanentmagneterregtem Feld, mit den folgenden Merkmalen:
a) ein Rotor (4) umfaßt eine in einem Statorgehäuse (1) gelagerte Rotorwelle (3) mit einer darauf drehstarr befestigten und sich im wesentlichen radial erstreckenden kreisrunden zentralen Scheibe (5) aus faserverstärktem Kunststoff;
b) am äußeren Umfang der zentralen Scheibe (5) und koaxial zur Rotorwelle (3) erstrecken sich axial nach beiden Seiten ringförmig ausgebildete Polkörper (6);
c) die Polkörper (6) des Rotors (4) umfassen wechselweise angeordnete Permanentmagnete (7) und Weicheisenteile (7a), die durch Einbettung in Kunststoff miteinander verbunden sind;
d) radial außerhalb und innerhalb der Polkörper (6) sind ringförmig Polschuhe (9) mit Wicklungen (11) angeordnet, die Bestandteil eines Stators (2) sind und die Polkörper (6) am ganzen inneren und äußeren Umfang einschließen;
e) zwischen den Polkörpern (6) und den Polschuhen (9) sind radiale Luftspalte (10) vorhanden;
dadurch gekennzeichnet, daß
f) die ringförmigen Polkörper (6) der zentralen Scheibe (5) abgewandte freie Stirnseiten (8) aufweisen, an denen jeweils ein massiver Ring (12, 22) zur Stabilisierung befestigt ist.

2. Elektrische Maschine nach Anspruch 1, dadurch gekennzeichnet, daß der massive Ring (12, 22) aus Kunststoff besteht.

3. Eleketrische Maschine nach Anspruch 1 oder 2, dadurch gekennzeichnet, daß der massive Ring (12) über ein Lager (13) am Statorgehäuse (1) abgestützt ist.

4. Eleketrische Maschine nach Anspruch 3, dadurch gekennzeichnet, daß sich der massive Ring (12) nach radial innen erstreckt.

5. Elektrische Maschine nach einem der Ansprüche 3 oder 4, dadurch gekennzeichnet, daß das Lager (13) ein Wälzlager ist, welches vom Ring (12) umschlossen ist.

6. Elektrische Maschine nach einem der Ansprüche 4 oder 5, dadurch gekennzeichnet, daß der Ring (12) zwischen dem Polkörper (6) und dem Lager (13) in einem Teilbereich (14) wenigstens radial nachgiebig ausgebildet ist.

7. Elektrische Maschine nach Anspruch 1 oder 2, dadurch gekennzeichnet, daß sich der Ring (22) vom Bereich des Polkörpers (6) aus nach radial außen und innen in den Bereich der Polschuhe (9) erstreckt.

EP 0 380 744 A1

## Fig.1

## Fig.2

## EUROPÄISCHER RECHERCHENBERICHT

Europäisches
Patentamt

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | Soviet Inventions Illustrated, Derwent Puplications Ltd., Sektion Elektrotechn. Woche C30, Abstrakt G 5098, X11, 03. Sept. 1980 & SU-A-702464 (KRONEBERG YUN), 05.12.1979 --- | 1 | H02K21/12 |
| A | US-A-4433260 (L.E. WEISBORD_ET AL.) * Spalte 3, Zeile 19 - Spalte 4, Zeile 23; Figuren 1, 2 * ----- | 1 | |

RECHERCHIERTE
SACHGEBIETE (Int. Cl.5)

H02K1/00
H02K21/00
H02K29/00
H02K41/00

Der vorliegende Recherchenbericht wurde für alle Patentansprüche erstellt

| Recherchenort | Abschlußdatum der Recherche | Prüfer |
|---|---|---|
| BERLIN | 30 APRIL 1990 | GESSNER E.A.F. |